# EUROPÄISCHE PATENTSCHRIFT

(11) **EP 1 082 634 B1**
(45) Veröffentlichungstag und Bekanntmachung des Hinweises auf die Patenterteilung: **06.03.2002**
(21) Anmeldenummer: 99920517.2
(22) Anmeldetag: 21.05.1999
(51) Int. Cl.: G02B 23/24, F27D 21/02

(54) **VERFAHREN ZUR INSPEKTION VON KAMMERN, INSPEKTIONSEINRICHTUNG UND INDUSTRIELLE PROZESSKAMMER**
METHOD FOR INSPECTING CHAMBERS, INSPECTION DEVICE AND INDUSTRIAL PROCESS CHAMBER
PROCEDE POUR INSPECTER DES CHAMBRES, DISPOSITIF D'INSPECTION ET CHAMBRE POUR PROCESSUS INDUSTRIELS

(30) Priorität: 29.05.1998 WO PCT/CH98/00228
(43) Veröffentlichungstag der Anmeldung: 14.03.2001
(73) Patentinhaber: Michaelsen, Christian S., 8712 Stäfa (CH)
(72) Erfinder: Michaelsen, Christian S., 8712 Stäfa (CH)
(74) Vertreter: Troesch Scheidegger Werner AG
(86) Internationale Anmeldenummer: CH9900220
(87) Internationale Veröffentlichungsnummer: WO9963383

(56) Entgegenhaltungen:
- EP-A- 0 152 301
- EP-A- 0 364 578
- US-A- 3 764 736
- US-A- 4 131 914
- US-A- 4 218 989

## Beschreibung

Die vorliegende Erfindung betrifft ein Verfahren nach dem Oberbegriff von Anspruch 1, eine Inspektionseinrichtung nach demjenigen von Anspruch 12 sowie eine industrielle Prozesskammer nach demjenigen von Anspruch 18, weiter Verwendungen hiervon.

Es ist üblich, Kammern industrieller Prozesse, die unter Betriebsbedingungen eingesetzt werden, welche eine Begehung nur nach Prozessabschaltung und entsprechend langen Wartezeiten zulassen, in regelmässigen Abständen - so selten wie nur möglich bzw. so oft wie nötig - auf Schadstellen, wie Risse etc., zu inspizieren. Es ist dabei ein Kompromiss zu schliessen zwischen Prozessicherheit einerseits und kommerziellen Aspekten anderseits, bedingt doch, wie erwähnt, eine Inspektion der Prozesskammern sehr oft eine längerwierige Stillsetzung mindestens von Prozessteilen. Als Beispiele solcher Kammern können erwähnt werden Kessel, Brennräume, Öllager, chemische Prozesskammern etc., grundsätzlich alle Arten von Kammern, welche im Betrieb nicht zur visuellen direkten Inspektion zugänglich sind.

Aus der US 4 218 989 ist es bekannt, fest an einer Beschichtungslanze eine TV-Kamera einer Beschichtungsdüse zuzuordnen. Dies, um Innenräume, beispielsweise von Öfen oder Behältnissen, unter Kameraüberwachung neu zu beschichten.

Dabei ist die Beschichtungslanze Teil eines Beschichtungsfahrzeuges, worauf eine Bedienungsperson, in einem Führerstand, die Position der Beschichtungslanze mit der TV-Kamera überwacht und steuert.

Aus der EP 0 152 301 ist es bekannt, das Innere von Behältnissen mittels einer Lanze zu inspizieren, von deren Ende visuelle Signale über Lichtleiter einer ausserhalb des Behältnisses angeordneten Kamera zugeführt werden.

Aus der US 3 764 736 ist es bekannt, dass Innere von nuklearen Reaktoren mittels einer endständig an einer Inspektionslanze vorgesehenen TV-Kamera zu inspizieren. Bei diesem Vorgehen wird ausserhalb der Reaktorwandung eine Antriebs- und Positionierungseinrichtung vorgesehen, mittels welcher, gemeinsam mit der Lanze, eine daran bezüglich einer Lanzen-Querachse auf und ab schwenkbaren TV-Kamera angesteuert wird, sowohl was Auf-/Ab-Bewegung in Lanzenlängsrichtung anbelangt, wie auch, was die Kameradrehbewegung um die Längsachse der Lanze anbelangt.

Es ist Aufgabe der vorliegenden Erfindung, ein Verfahren bzw. eine Inspektionseinrichtung letztgenannter Art zu schaffen, womit bezüglich notwendiger Installationen für die Inspektion ein wesentlich geringerer Aufwand betrieben werden muss und wesentlich höhere Einsatzflexibilität erreicht wird einerseits, und andererseits Prozesskammern auch bei hoher Prozessbelastung in situ, d.h. während ihres Betriebes, inspiziert werden können.

Zu diesem Zweck zeichnet sich das erfindungsgemässe Verfahren nach dem Kennzeichen von Anspruch 1 aus. Demnach wird die Kamera an der und bezüglich der Lanze in erwünschter Richtung ferngesteuert um mindestens zwei Achsen geschwenkt.

Dadurch, dass die Kamera an der Lanze in alle erwünschten Richtungen ferngesteuert schwenkbar ist, erübrigen sich jegliche Positionierungsantriebe von ausserhalb der Kammer, bis auf einen Linearantrieb in Längsachsenrichtung der Lanze, sofern erforderlich. Diese lineare Auf-/Ab-Positionierung kann aber ohne weiteres durch eine herkömmliche, auch zu anderen Zwecken eingesetzte Handlingvorrichtung, wie durch einen Kranen mit Laufkatze, realisiert sein. Weil keine Antriebsorgane der beispielsweise aus der US 3 764 736 bekannten Art ausserhalb der zu inspizierenden Kammer vorzusehen sind, ergibt sich eine wesentlich höhere Einsatzflexibilität, indem die Lanze mit der Kamera praktisch an beliebig engen Stellen mit entsprechend vorgesehener Kammeröffnung eingeführt werden kann.

In einer bevorzugten Ausführungsform wird eine hochauflösende Videokamera eingesetzt.

Insbesondere an einer Prozesskammer mit Prozesstemperaturen über 500°C, vorzugsweise gar über 800°C, insbesondere sogar von mindestens 1000°C, wird die Inspektion in höchst vorteilhafter Weise während des Prozesses vorgenommen. Dadurch wird eine Prozess-Stillsetzung für die Inspektion nicht nötig, was bezüglich Prozessökonomie, wie sich ohne weiteres ergibt, ganz wesentliche Vorteile mit sich bringt.

In einer weiteren bevorzugten Ausführungsform des erfindungsgemässen Verfahrens wird eine Videokamera eingesetzt, die im sichtbaren Spektralbereich oder im Infrarotbereich sensitiv ist, wobei die Kamera an der Lanze auswechselbar sein kann.

Insbesondere mit Blick auf die In-situ-Inspektion von Prozesskammern wird weiter vorgeschlagen, dass man die Kamera über die Lanze kühlt, vorzugsweise gas-, vorzugsweise luftkühlt, vorzugsweise mittels zwischen Kamerateilen und Umgebung erstellter Mehrfach-Kühlströmung, mindestens Zweifach-Kühlströmung. Dies besagt, dass man zwischen Kamerapartien und der Prozessumgebung mindestens zwei Gas-, vorzugsweise Luftkühlungs-Strömungsschichten erstellt, wie noch zu erläutern sein wird, bevorzugt so, dass sich die jeweiligen Strömungen entgegenlaufen.

Im weiteren wird, in bevorzugter Ausführungsform, Lanze und Kamera bevorzugt manuell oder mittels einer Handling-Einrichtung, bevorzugt mittels eines ohnehin vorzusehenden Krans, vorzugsweise mit Laufkatze, in eine Inspektionsöffnung der Kammer eingeführt, welche, vorzugsweise obenliegend, optimal kleindurchmessrig ausgestaltet wird, nämlich mit einem Durchmesser von höchstens 50 cm, vorzugsweise von höchstens 20 cm, ja sogar von höchstens 12 cm.

Vorsehen einer derart kleinen Inspektionsöffnung ist unter vielen Aspekten höchst vorteilhaft, beispielsweise bezüglich Raumbedürfnis, bezüglich Handling von Verschlusselementen, Prozessstörungen, Verhinderung schädlicher Prozessaustritte, ggf. Abschotung etc. Die erfindungsgemässe Inspektionseinrichtung zeichnet sich, zur Lösung der obgenannten Aufgabe, nach dem Kennzeichen von Anspruch 12 aus, bevorzugte Ausführungsformen nach den Ansprüchen 13 bis 17.

Eine erfindungsgemässe industrielle Prozesskammer zeichnet sich aus nach dem kennzeichnenden Teil von Anspruch 18, bevorzugte Ausführungsformen nach den Ansprüchen 19 bzw. 20, während sich eine bevorzugte Verwendung sowohl des erfindungsgemässen Verfahrens wie auch der erfindungsgemässen Inspektionseinrichtung nach Anspruch 21, bevorzugt nach Anspruch 22 auszeichnet. Anspruch 23 definiert einen erfindungsgemässen Kamerakopf.

Die wie erwähnt mittels einer Handling-Einrichtung, bevorzugterweise mittels eines Krans mit Laufkatze, eingeführte Inspektionseinrichtung ist, ausserhalb der Prozesskammer, mit einer Überwachungs- und Steuereinheit wirkverbunden, woran einerseits Inspektionsinformationen abgespeichert bzw. angezeigt werden, womit anderseits die Lanzenposition, aber insbesondere die Schwenkposition der Kamera über die am Kopf integrierten Antriebe angesteuert wird. Als thermisch hoch belastete Prozesskammern, die sich besonders für den Einsatz des erfindungsgemässen Verfahrens bzw. der erfindungsgemässen Einrichtung anbieten, sind beispielsweise Brennerkammern, Kessel, Brennerräume, Chemieprozessräume, Räume von Nukleareinrichtungen etc. zu nennen, insbesondere bei hohen Betriebstemperaturen im oben angegebenen Bereich.

Die Erfindung wird anschliessend beispielsweise anhand von Figuren erläutert. Es zeigen:
- Fig. 1: schematisch, eine erfindungsgemässe Inspektionseinrichtung mit Kamerakopf zur Durchführung des erfindungsgemässen Verfahrens, eingelassen in einer erfindungsgemässen industriellen Prozesskammer,
- Fig. 2: schematisch, eine Längsschnittdarstellung der erfindungsgemässen Einrichtung, insbesondere zur Erläuterung des Kamerapositionsantriebes sowie deren Kühlung.

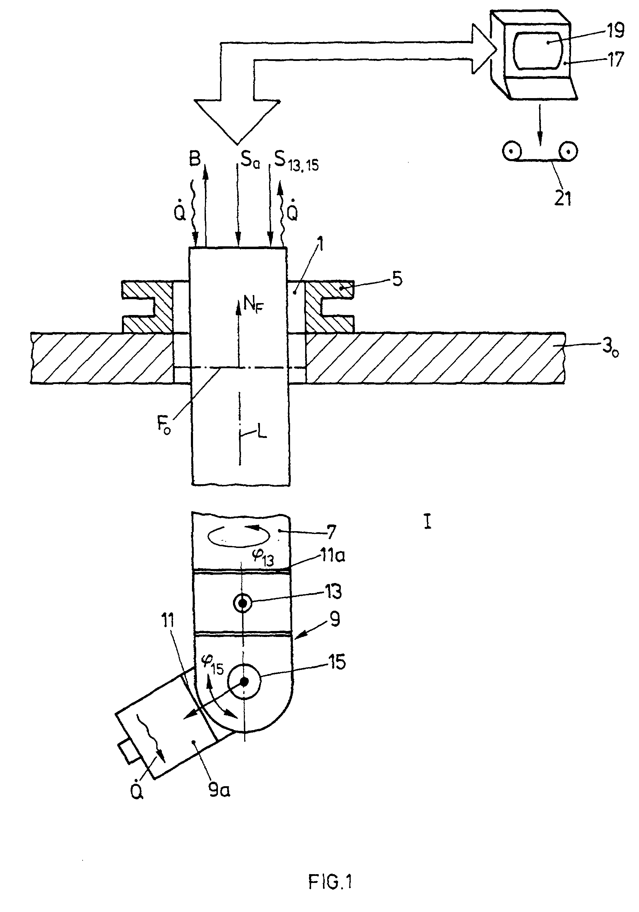

Gemäss Figur 1 ist, durch die Inspektionsöffnung 1 in der oberen Kammerwand 3ₒ mit verschliessbarem Flansch 5, eine Lanze 7 eingeführt, welche gegebenenfalls einige Meter lang sein kann. An dem ins Kammerinnere I einragenden Ende der Lanze 7 ist ein Videokamera-Kopf 9 mit Kamera 9a montiert, vorzugsweise über einen für mehrere Kameratypen, insbesondere eine Kamera, die im sichtbaren Spektralbereich sensitiv ist und eine Kamera, die im Infrarotbereich sensitiv ist, gemeinsamen Normverschluss 11, vorzugsweise einen Schnellverschluss. Der Kamerakopf 9 ist an der Lanze 7 mittels eines Antriebsmotors 13 um die Lanzenachse L entsprechend ϕ₁₃ gesteuert schwenkbar und exakt positionierbar und ist weiter mittels eines gesteuerten Antriebes 15, wie mit ϕ₁₅ dargestellt, exakt bezüglich der Achse L winkelpositionierbar. Der ganze Kopf kann vorzugsweise mittels eines weiteren Normverschlusses, dabei bevorzugt wiederum mittels eines Schnellverschlusses, z.B. eines Bajonettverschlusses, gelöst und wieder montiert werden.

Wie schematisch dargestellt, werden Steuersignale S₁₃ und S₁₅ für die Antriebsmotoren 13 und 15 durch die Lanze zu den Motoren am Kopf 9 geführt. Desgleichen werden Steuersignale Sₐ für den Kamerabetrieb durch die Lanze geführt. Die Bildsignale B von der Kamera 9a werden weiter vorzugsweise mittels Lichtleitern durch den Kopf 9 und die Lanze nach aussen geführt. Bevorzugterweise und insbesondere für den Einsatz in Hochtemperaturkammern, beispielsweise bei Betriebstemperaturen über 500°C, gar von über 800°C oder sogar von mindestens 1000°C, wird die Lanze 7 und insbesondere das Gehäuse der Kamera 9a mittels eines Kühlmediums, wie - bevorzugt - mittels Wasser oder mittels eines Gases, vorzugsweise mit Luft, in einem geschlossenen oder offenen Kreislauf gekühlt, wozu (nicht dargestellt) am kammeräusseren Ende der Lanze 7 Anschlüsse für das mit den Pfeilen

Q schematisch dargestellte Kühlmedium vorgesehen sind. Steuersignale S und Bildsignale B werden bevorzugt einer Steuer- und Eingabeeinheit 17, entfernt von der Inspektionsöffnung 1, zugeführt bzw. von letzterer ausgegeben. Das momentane Inspektionsresultat wird an einem Display 19 visualisiert und gegebenenfalls, wie bei 21 dargestellt, abgespeichert. Bevorzugterweise weist die Inspektionsöffnung 1 einen Durchmesser von nicht mehr als 50 cm auf, bevorzugterweise gar von nicht mehr als 20 cm, sogar von nicht mehr als 12 cm, und ist mit bezüglich Öffnungsfläche Fₒ vertikaler Flächennormalen N_{F} bevorzugt in oberen Wandungsbereichen der zu inspizierenden Prozesskammer 3ₒ angeordnet.

Die gegebenenfalls mehrere Meter lange Inspektionslanze 7 mit Kamerakopf 9 und Kamera 9a wird bevorzugt mittels eines Krans mit Laufkatze eingeführt, wozu (nicht dargestellt) am Aussenende der Lanze 7 eine lösbare Hakeinrichtung vorgesehen ist. Kabel für Steuer- und Bildsignale sowie Leitungen für das Kühlmedium sind flexibel und erlauben ohne weiteres ein Einführen der Lanze in die jeweils zu inspizierende Prozesskammer.

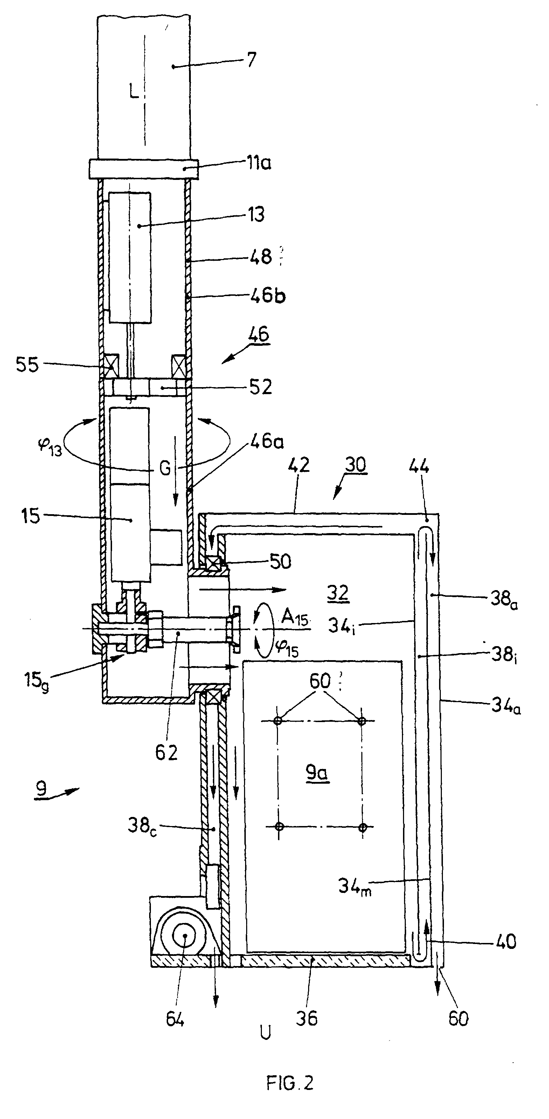

In Fig. 2 ist schematisch eine Längsschnittdarstellung durch die erfindungsgemässe Lanzen-/Kamera-Anordnung dargestellt, insbesondere deren erfindungsgemässer Kamerakopf 9. Es sind für bereits beschriebene Teile und Grössen aus Übersichtsgründen dieselben Bezugszeichen verwendet. Die Kamera 9a sitzt in einem mindestens abschnittsweise doppel-, drei- oder gar mehrwandigen Gehäuse 30. Der innerste Gehäuseraum 32, worin die eigentliche Kamera 9a aufgenommen ist, wird abgegrenzt durch eine Innenwand 34ᵢ.

Ausserhalb der Innenwand 34ᵢ ist eine zweite Wand 34ₘ vorgesehen, welche mit einem Aufnahmefenster 36, beispielsweise aus Quarzglas, dicht verbunden ist, derart, dass ein Kühlkanal 38ᵢ über fensterseitige Verbindungen 40 mit dem Innenraum 32 kommuniziert. Die Wand 34ₘ definiert gemeinsam mit der Wand 34ᵢ, wie dargestellt mindestens entlang Kamera-angrenzender Gehäusepartien, den ersten Kühlkanal 38ᵢ. Aussenliegend ist eine weitere Wand 34ₐ vorgesehen, welche mit der rückseitigen Abschlusswand 42 des Gehäuses 30 dichtend verbunden ist und welche mit der Wand 34ₘ einen äusseren Strömungskanal 38ₐ definiert, welcher in einem Bereich 44 mit dem Strömungskanal 38ᵢ kommuniziert.

Das Gehäuse 30 ist, wie bei 50 dargestellt, um eine Achse A₁₅ an einem Lanzen-Anschlussstutzen 46 drehgelagert. Im Lanzen-Anschlussstutzen 46 ist der Antriebsmotor 15 eingebaut, welcher über ein Getriebe 15_{g} Gehäuse 30 mit Kamera 9a, entsprechend ϕ₁₅, um die Achse A₁₅ schwenkt. Der Anschlussstutzen 46 seinerseits ist zweiteilig, mit Teil 46a und 46b, koaxial relativ zueinander, wie mit Lagern 55 angetönt, drehgelagert. Der Teil 46a wird mittels eines Antriebsmotors 13 ggf. über ein Getriebe und, wie schematisch dargestellt, beispielsweise eine Zahnrad-Zahnkranz-Drehkopplung 52 bezüglich des Teils 46b geschwenkt.
Dies entsprechend der Schwenkbewegung ϕ₁₃.

Bevorzugterweise wird der Schnellverschluss 11a für den ganzen Kamerakopf 9 vorgesehen, zum raschen Ankoppeln dieses erfindungsgemässen Kopfes 9 an die im wesentlichen als einfaches Hohlrohr ausgebildete Lanze 7.

Kühlgas G, vorzugsweise Kühlluft, wird durch die Lanze 7 entlang der Antriebsmotoren 13 und 15 durch die offene Drehlagerung am Lager 50, wie mit den Pfeilen angedeutet, in den Innenraum 32 eingepresst. Erst umströmt dieses Gas direkt die Kamera 9a, um vorzugsweise dreiseitig in den Strömungskanal 38ᵢ einzuströmen. Von dort strömt es in den äusseren Strömungskanal 38ₐ, von wo es durch Öffnungen 60, welche die Prozessumgebung U mit dem äusseren Strömungskanal 38ₐ verbinden, in den Prozessraum ausströmt. Die Austrittsöffnungen werden bevorzugt durch Öffnungen mit Durchmesser ⌀ ≤ 1 mm, vorzugsweise ⌀ ≤ 0,5 mm, realisiert. Entsprechend dem Prozess kann anstelle von Luft auch ein anderes Gas eingesetzt werden. Bei 62 ist die Durchführung durch das Lager 50 für Kamerasteuer- und Bildübertragungsleitungen dargestellt, die Steuerleitungen zu den Antriebsmotoren 13 und 15 sind nicht dargestellt.

Es ist zu betonen, dass die in der Ansicht gemäss Fig. 2 vorgestellte, durch Mehrfachwandungen realisierte Kühlungstechnik, mit mehreren zwischen Kamera 9a und Prozessumgebung vorgesehenen Kühlgas-Strömungslagen, bevorzugterweise mindestens dreiseitig um die Kamera 9a realisiert wird.

Gemäss Fig. 2 ist weiter ein flexibel montierbarer Scheinwerfer 64 vorgesehen. Dieser wird durch den im zugeordneten Wandungsbereich realisierten Strömungskanal 38_{c} durch das in den Innenraum 32 eingepresste Gas mitgekühlt.

Mit dem beschriebenen erfindungsgemässen Vorgehen wird es möglich, an einer mit den erwähnten kleinen Öffnungen ausgerüsteten Prozesskammer während ihres Prozessbetriebes, d.h. im wesentlichen jederzeit, Inspektionen durchzuführen, was die Rentabilität des Gesamtprozesses bzw. der Gesamtanlage wesentlich erhöht. Insbesondere kann die erfindungsgemässe Inspektion ohne Vorsehen aufwendiger und voluminöser Antriebseinrichtungen ausserhalb der Kammer eingesetzt werden, was die Einsatzflexibilität drastisch erhöht.

## Patentansprüche

1. Verfahren zur Inspektion von Kammern (3) industrieller Prozesse, bei dem man mittels einer Lanze (7) eine Kamera (9) in die Kammer (3) einführt und Bilddaten (B) durch die Lanze an eine Überwachungs- und Steuereinheit (17, 19) ausserhalb der Kammer überträgt, **dadurch gekennzeichnet, dass** man die Kamera (9a), zusammen mit einem Kamerakopf (9), worin die Kamera eingebaut ist, an der Lanze und bezüglich der Lanze (7) in erwünschte Richtung (ϕ₁₃, ϕ₁₅) um mindestens zwei Achsen ferngesteuert schwenkt.

2. Verfahren nach Anspruch 1, **dadurch gekennzeichnet, dass** man den Kamerakopf mittels eines Schnellverschlusses an der Lanze montiert.

3. Verfahren nach einem der Ansprüche 1 oder 2, **dadurch gekennzeichnet, dass** man eine Videokamera einsetzt.

4. Verfahren nach einem der Ansprüche 1 bis 3 an einer Kammer mit Prozesstemperatur über 500°C, vorzugsweise über 800°C, **dadurch gekennzeichnet, dass** man die Inspektion während des Prozesses vornimmt.

5. Verfahren nach einem der Ansprüche 1 bis 3, **dadurch gekennzeichnet, dass** man eine Videokamera (9a) einsetzt, die im sichtbaren Spektralbereich oder im Infrarotbereich sensitiv ist.

6. Verfahren nach einem der Ansprüche 1 bis 5, **dadurch gekennzeichnet, dass** man die Kamera über die Lanze kühlt (Q), vorzugsweise gas-, vorzugsweise luftkühlt, vorzugsweise mittels zwischen Kamerateilen und Umgebung erstellter Mehrfach-Kühlströmung (38ₐ, 38ᵢ, 38_{c}), mindestens Zweifach-Kühlströmung.

7. Verfahren nach einem der Ansprüche 1 bis 6, **dadurch gekennzeichnet, dass** man an der Kammer (3), vorzugsweise oben liegend, eine verschliessbare Inspektionsöffnung (1), vorzugsweise mit einem Durchmesser von höchstens 50 cm, vorzugsweise von höchstens 20 cm, vorzugsweise gar von höchstens 12 cm, vorsieht, vorzugsweise mit vertikaler Öffnungsnormalen (N_{F}) und Lanze (7) mit Kamerakopf (9) mittels einer Handling-Einrichtung, vorzugsweise mit einem Kranen, in die geöffnete Inspektionsöffnung einführt.

8. Verfahren nach einem der Ansprüche 1 bis 7, **dadurch gekennzeichnet, dass** man Bildsignale (B) der Kamera mittels Lichtleitern durch die Lanze (7) nach aussen führt.

9. Verfahren nach einem der Ansprüche 1 bis 8, **dadurch gekennzeichnet, dass** man Steuersignale und Bildsignale entfernt von einer Inspektionsöffnung an der Kammer, worin Lanze und Kamera eingeführt werden, an einer Steuer- und Eingabeeinheit (17) ausgibt bzw. dieser Einheit zuführt.

10. Verfahren nach Anspruch 9, **dadurch gekennzeichnet, dass** man das momentane Inspektionsresultat an einem Display visualisiert und vorzugsweise abspeichert.

11. Verfahren nach einem der Ansprüche 1 bis 10, **dadurch gekennzeichnet, dass** man mit der Kamera einen Scheinwerfer bewegt.

12. Inspektionseinrichtung für Kammern (3) industrieller Prozesse, mit:
- einer Einführungslanze (7),
- endständig an der Einführungslanze (7) einer getrieben schwenkbar gelagerten Kamera (9a), weiter einer Schwenkantriebs-Steuerverbindung für die Kamera (9a), die durch die Lanze geführt ist, mit Bildübertragungsleitungen, sowie mindestens einer über die Lanze (7) mit der Kamera (9a) wirkverbundenen Steuer- und Displayeinheit (17, 19),
**dadurch gekennzeichnet, dass** die Kamera (9a) mit einem Kamerakopf (9) an der Lanze (7) sowohl bezüglich der Lanzenlängsachse (L) wie auch bezüglich einer dazu querstehenden Achse getrieben schwenkgelagert ist.

13. Inspektionseinrichtung nach Anspruch 12, **dadurch gekennzeichnet, dass** ein Antrieb (13, 15) für die Schwenkbewegungen des Kamerakopfes im Kamerakopf eingebaut ist.

14. Einrichtung nach einem der Ansprüche 12 oder 13, **dadurch gekennzeichnet, dass** die Kamera (9a) und/oder der Kamerakopf (9) an der Lanze (7) vorzugsweise mittels eines Normverschlusses, vorzugsweise Schnellverschlusses (11, 11a), auswechselbar ist bzw. sind.

15. Einrichtung nach einem der Ansprüche 12 bis 14, **dadurch gekennzeichnet, dass** Lanze (7) und ein Kameragehäuse am Kopf (9) ein Kühlmedium-Leitungssystem (*Q*) aufweisen und die Lanze (7), an ihrem dem Kopf (9) abgewandten Ende, Kühlmediumsanschlüsse.

16. Einrichtung nach einem der Ansprüche 12 bis 15, **dadurch gekennzeichnet, dass** ein, mindestens abschnittsweise, mindestens doppelwandig ausgeführtes Kameragehäuse (30) vorgesehen ist, welches mit einer Druckgas-, vorzugsweise Druckluftzuführung durch die Lanze (7) wirkverbindbar ist, wobei durch die Doppelwandung (34ᵢ, 34ₘ, 34ₐ) gebildete Hohlräume (38ᵢ, 38ₐ) so strömungsverbunden sind und mit der Umgebung kommunizieren, dass in den Hohlräumen je eine Strömung des Gases entsteht, vorzugsweise jeweils in zueinander inverser Richtung.

17. Einrichtung nach einem der Ansprüche 12 bis 16, **dadurch gekennzeichnet, dass** am Kamerakopf ein Scheinwerfer montiert ist.

18. Industrielle Prozesskammer (3) mit einer Einrichtung nach einem der Ansprüche 12 bis 17, **dadurch gekennzeichnet, dass** sie eine schliessbare Inspektionsöffnung (1) zum Einführen von Lanze (7) und Kamerakopf (9) aufweist mit einem Öffnungsdurchmesser von höchstens 50 cm, vorzugsweise von höchstens 20 cm, vorzugsweise gar von höchstens 12 cm.

19. Kammer nach Anspruch 18, **dadurch gekennzeichnet, dass** die Inspektionsöffnung (1) eine vertikale, nach oben gerichtete Öffnungsflächennormale aufweist und der Kammer (3) eine Handling-Einrichtung zum Einführen von Lanze (7) und Kamera (9) zugeordnet ist, vorzugsweise eine Kraneneinrichtung mit Laufkatze.

20. Kammer nach Anspruch 18 oder 19, **dadurch gekennzeichnet, dass** sie eine Prozesskammer für bei Temperaturen über 500°C, vorzugsweise über 800°C, vorzugsweise gar über 1000°C ablaufende Prozesse ist.

21. Verwendung des Verfahrens nach einem der Ansprüche 1 bis 11 bzw. der Einrichtung nach einem der Ansprüche 12 bis 17 für die In-situ-Inspektion thermisch hochbelasteter Prozesskammern, wie von Brennerkammern, Kesseln, Brennerräumen, Chemie-Prozesskammern.

22. Verwendung nach Anspruch 21 für Inbetrieb-Inspektion thermisch hochbelasteter Kammern bei Temperaturen über 500°C, vorzugsweise über 800°C, insbesondere von mindestens 1000°C.

23. Kamerakopf zur Durchführung des Verfahrens nach einem der Ansprüche 1 bis 11, **dadurch gekennzeichnet, dass** er umfasst:
- eine Kamera (9a) in einem Gehäuse (30), welches bezüglich einer zur optischen Kameraachse gewinkelten ersten Achse (A15) an einem Kopfteil (46a) drehgelagert ist, welcher seinerseits an einem weiteren Kopfteil (46b) bezüglich einer zweiten, zur ersten Achse (A15) gewinkelten Achse (L) drehgelagert ist, weiter mit einem Antriebsmotor (15) für die Schwenkbewegung von Kamera und Gehäuse um die erste Achse (A15) und einem weiteren Antriebsmbtor (13) für die relative Schwenkbewegung der Kopfteile (46a, 46b).

## Claims

1. A process for the inspection of chambers (3) for industrial processes, in which a camera (9) is inserted into the chamber (3) by means of a lance (7) and transmits image data (B) through the lance to a monitoring and control unit (17, 19) outside the chamber, **characterized by** the fact that the camera (9a) together with a camera head (9) containing the camera, is swivelled by remote control on the lance and in relation to the lance (7) about at least two aces in the desired direction (φ₁₃,φ₁₆).

2. The process of Claim 1, **characterized in that** the camera head is mounted on the lance by means of a quickfastening device.

3. The process of Claim 1 or 2, **characterized by** the fact that a video camera is used.

4. The process of one of Claims 1 or 2 on a chamber with a process temperature over 500°C preferably over 800°C, **characterized by** the fact that the inspection is made during the process.

5. The process of one of Claims 1 to 3, **characterized by** the fact that a video camera (9a) is used which is sensitive in the visible spectral range or in the infrared range.

6. The process of one of Claims 1 to 5, **characterized by** the fact that the camera is cooled (Q) over the lance, preferably gas cooled, preferably air-cooled, preferably by means of multiple cooling streams (38ₐ, 38ᵢ, 38ₒ) at least a dual cooling stream, set up between the parts of the camera and the environment.

7. The process of one of Claims 1 to 6, **characterized by** the fact that there is an inspection hole (1) on the chamber, preferably on top, that can be closed and preferably has a diameter of maximum 50 cm, preferably maximum 20 cm, or even preferably maximum 12 cm, preferably with vertical hole normal (Nₚ), and the lance (7) with the camera head (9) is inserted into the opened inspection hole by means of a handling device, preferably with a crane.

8. The process of any of claims 1 to 7, **characterized in that** the image data (B) of the camera are transmitted to the outside by means of light guides through the lance.

9. The process of any of Claims 1 to 8, **characterized in that** control signals and image signals are emitted by respectively supplied by a control and input unit remote from an inspection hole on the chamber into which said lance and camera are introduced.

10. The process of Claim 9, **characterized in that** the instantaneous inspection result is visualized on a display and preferably stored.

11. The process of any of Claims 1 to 10, **characterized in that** a projector is moved simultaneously with the camera.

12. An inspection device for chambers (3) of industrial processes, with:
- an insertion lance (7),
- on the end of the insertion lance (7) a camera (9a) that is driven and mounted so it can be swivelled, and a swivel drive/control connection for the camera (9a), which is leads through the lance, with mage-transmission lines, as well as at least one control and display unit (17, 19) functionally connected to the camera (9a) via the lance (7),
**characterized by** the fact that the camera (9a) with the camera head (9) is mounted so it can swivel and is driven on the lance (7) both in relation to the lance's longitudinal axis (L) and also in relation to the transverse axis.

13. The device as claimed in Claim 12, **characterized by** a drive (13, 15) for the swivel movements of the camera head is mounted in said camera head.

14. The device as claimed in Claim 12 or 13, **characterized by** the fact that the camera (9a) and/or the camera head (9) on the lance (7) can be exchanged preferably by means of a standard fastener, preferably a quick fastening device (11, 11a).

15. The device of one of Claims 12 to 14, **characterized by** the fact that lance (7) and a camera housing on the head (9) have a system of lines (Q) for the cooling medium, and the lance (7) has connections for the cooling medium on the end facing away from the head (9).

16. The device of one of Claims 12 to 15, **characterized by** the fact that there is a camera housing (30) designed to be double-walled, at least in sections, which has an operative connection with a pressurized gas feed, preferably a compressed air feed through the lance (7), wherein hollow spaces (38ᵢ,38ₐ) formed by the double walls (34ᵢ, 34ₘ, 34ₐ) are connected to the flow and communicate with the environment so that there is built up a gas stream in each of said hollow spaces, preferably in opposite directions.

17. The device of one of claims 12 to 16, **characterized by** a projector mounted on said camera dead.

18. An industrial process chamber (3) comprising a device as claimed in one of Claims 12 to 17, **characterized by** the fact that it has an inspection hole (1) to insert a lance (7) that can be closed and a camera head (9), and the diameter of the hole is 50 cm maximum, preferably 20 cm maximum, or even preferably 12 cm maximum.

19. The chamber of Claim 18, **characterized by** the fact that the inspection hole (1) presents a vertical surface normal pointing up and the chamber (3) is provided with a handling device for inserting the lance (7) and the camera (9), preferably a crane with a trolley.

20. The chamber of Claim 18 or 19, **characterized by** the fact that it is a process chamber for processes carried out a t temperatures over 500°C, preferably over 800°C, and even preferably over 1000°C.

21. The use of the process of one of Claims 1 to 11 or of the device of one of Claims 12 to 17, for on-site inspection of thermally high-loaded process chambers, such as combustion chambers, boilers, burner rooms, chemical process chambers.

22. The use of Claim 21 for operational inspection of thermally high-loaded chambers at temperatures over 500°C, preferably over 800°C and especially at least 1000°C.

23. A camera head for carrying out the process of one of Claims 1 to 11, **characterized by** the fact that it includes:
- a camera (9a) in a housing (30) which is mounted so it can rotate in relation to a first axis (A15) at an angle to the axis of the optical camera on a head part (46a), which in turn is mounted so it can rotate on another head part (46b) in relation to a second axis (L) at an angle to the first axis (A15), and with a drive motor (15) for the swivel movement of camera and housing around the first axis (A15) and another drive motor (13) for the relative swivel movement of the head parts (46a, 46b).

## Revendications

1. Procédé pour inspecter des chambres (3) pour des procédés industriels, dans lequel une caméra est introduit dans la chambre (3) au moyen d'une lances (7) et transmet des données d'images (B) à travers la lance à une unité de surveillance et de commande (17, 19) en dehors de la chambre, **caractérisé en ce que** la caméra (9a), ensemble avec une tête de caméra (9) dans laquelle la caméra est installée, est pivotée et dirigée par commande à distance sur la lance et par rapport à la lance (7) autour au moins deux axes dans une direction désirée (φ₁₃,φ₁₆).

2. Procédé selon la revendication 1, **caractérisé en ce que** la tête de caméra est montée sur la lance au moyen d'une fermeture rapide.

3. Procédé selon l'une des revendications 1 ou 2, **caractérisé en ce qu'**une caméra vidéo est utilisée.

4. Procédé selon l'une des revendications 1 à 3 pour une chambre avec une température de procédé au-dessus de 500°C, de préférence au-dessus de 800°C, **caractérisé en ce que** l'inspection se fait durant le procédé.

5. Procédé selon l'une des revendications 1 à 3, **caractérisé en ce que** l'on utilise une caméra vidéo (9a) sensitive dans la région spectral visible ou dans la région infrarouge.

6. Procédé selon l'une des revendications 1 à 5, **caractérisé en ce que** la caméra est refroidie (Q) par la lance, de préférence au moyen d'un gaz, notamment de l'air, de préférence au moyen d'un courant de refroidissement multiple (38ₐ, 38ᵢ, 38ₒ) entre les composantes de la caméra et de l'environnement, au minimum au moyen d'un courant de refroidissement double.

7. Procédé selon l'une des revendications 1 à 6, **caractérisé en ce que** l'on prévoit sur la chambre (3), de préférence sur sa partie supérieure, une ouverture d'inspection (1) pouvant être fermée, de préférence avec un diamètre maximum de 50 cm, de préférence au maximum de 20 cm, de préférence avec une normale (Nₚ) à l'ouverture verticale et **en ce que** l'on introduit dans l'ouverture ouverte une lance (7) avec tête de caméra (9) au moyen d'un dispositif de manipulation, de préférence au moyen d'une grue.

8. Procédé selon l'une des revendications 1 à 7, **caractérisé en ce que** des données d'image (B) de la caméra sont transmises à l'extérieur au moyen de guides de lumière menant par la lance (7).

9. Procédé selon l'une des revendications 1 à 8, **caractérisé en ce que** des signaux de commande et des signaux d'image sont émis respectivement reçus par une unité de commande et d'entrée à distance d'une ouverture d'inspection sur la chambre dans laquelle on introduit la lance et la caméra.

10. Procédé selon la revendication 9, **caractérisé en ce que** le résultat d'inspection momentané est visualisé sur un écran et de préférence mis en mémoire.

11. Procédé selon l'une des revendications 1 à 10, **caractérisé en ce qu'**un projecteur est déplacé simultanément avec la caméra.

12. Dispositif d'inspection pour des chambres de procédés industriels, comprenant :
- une lance d'insertion (7),
- sur une extrémité de la lance d'insertion (7) une caméra (9a) qui est entraînée et montée de manière à pouvoir être pivotée et une connexion d'entraînement et de commande pour la caméra (9a) passant par la lance, des linges de transmission d'image, ainsi qu'au moins une unité de commande et de visualisation (17, 19) connectée par la lance (7) avec la caméra,
**caractérisé en ce que** la caméra (9a) avec une tête de caméra (9) est montée sur la lance (7) de manière à pouvoir pivoter par entraînement par rapport à l'axe longitudinale (L) et un axe transversal au dernier de la lance.

13. Dispositif d'inspection selon la revendication 12, **caractérisé en ce que** des moyens d'entraînement (13, 15) pour faire pivoter la tête de caméra sont montés à l'intérieur de la tête de caméra.

14. Dispositif selon l'une des revendications 12 ou 13, **caractérisé en ce que** la caméra (9a) et/ou la tête de caméra (9) sur la lance (7) peuvent être échangées de préférence au moyen d'une fixation standard, de préférence au moyen d'une fixation rapide (11, 11a).

15. Dispositif selon l'une des revendications 12 à 14, **caractérisé en ce que** la lance (7) et un boîtier de caméra présentent sur la tête (9) un système de conduits pour un agent refroidisseur (Q) et **en ce que** la lance (7), sur son extrémité opposée à la tête (9) présente des raccords pour l'agent refroidisseur.

16. Dispositif selon l'une des revendications 12 à 15, **caractérisé par** un boîtier de caméra (30) à double paroi au moins dans certaines sections, qui peut être connecté fonctionnellement avec une amenée de gaz sous pression, de préférence d'air comprimé, à travers la lance (7), des cavités (38ᵢ, 38ₐ) formées par la paroi double (34ᵢ, 34ₘ, 34ₐ) étant interconnectées et communiquant avec l'environnement de manière telle qu'il se produit dans chacune des cavités un courant de gaz, de préférence dans des directions opposées.

17. Dispositif selon l'une des revendications 12 à 16, **caractérisé en ce qu'**un projecteur est monté sur la tête de caméra.

18. Chambre (3) pour procédé industriel avec un dispositif selon l'une des revendications 12 à 17, **caractérisée en ce qu'**elle présente une ouverture d'inspection (1) pouvant être fermée pour l'introduction de la lance (7) et de la tête de caméra (9), le diamètre de l'ouverture étant au maximum 50 cm, de préférence au maximum 20 cm, de préférence au maximum 12 cm.

19. Chambre selon la revendication 18, **caractérisée en ce que** l'ouverture d'inspection (1) présente une normale de superficie verticale dirigée vers le haut et **en ce que** la chambre (3) est équipée d'un dispositif de manipulation pour introduire la lance (7) et la caméra (9), de préférence d'une grue avec chariot roulant.

20. Chambre selon la revendication 18 ou 19, **caractérisée en ce qu'**elle est une chambre pour procédés se déroulant à des températures au-dessus de 500°C, de préférence au-dessus de 800°C, de préférence au-dessus de 1000°C.

21. Utilisation du procédé selon l'une des revendications 1 à 11 respectivement du dispositif selon l'une des revendications 12 à 17 pour l'inspection sur place de chambres de procédé à haute charge thermique, comme des chambres de combustion, de chaudières, de chambres à brûleurs et de chambres pour procédés chimiques.

22. Utilisation selon la revendication 21 pour l'inspection durant la marche de chambres à haute charge thermique à des températures au-dessus de 500°C, de préférence au-dessus de 800°C, de préférence au-dessus de 1000°C.

23. Tête de caméra pour la mise en oeuvre du procédé selon l'une des revendications 1 à 11, **caractérisée en ce qu'**elle comprend :
- une caméra (9a) dans un boîtier (30) qui peut être pivoté par rapport à un premier axe (A15) sur une section de tête (46a) formant un angle avec l'axe optique de la caméra, laquelle section peut pivoter à son tour sur une autre section de tête (46b) par rapport à un second axe (L) formant un angle par rapport au premier axe (A15), et un moteur d'entraînement (15) pour pivoter la caméra et le boîtier autour du premier axe (A15) et un second moteur d'entraînement (13) pour le pivotement relatif des section de tête (46a, 46b).
